Europäisches Patentamt

European Patent Office

Office européen des brevets

(19)

(11) Publication number: **0 183 392**
**B1**

(12) **EUROPEAN PATENT SPECIFICATION**

(45) Date of publication of the patent specification:
29.11.89

(51) Int. Cl.⁴: **H04N 7/167**

(21) Application number: **85307780.8**

(22) Date of filing: **28.10.85**

(54) Geographic blackout method for direct broadcast satellite system.

(30) Priority: **19.11.84 US 672925**

(43) Date of publication of application:
**04.06.86 Bulletin 86/23**

(45) Publication of the grant of the patent:
**29.11.89 Bulletin 89/48**

(84) Designated Contracting States:
**BE CH DE FR GB IT LI NL SE**

(56) References cited:
**WO-A-83/04154**
**US-A-4 323 922**
**US-A-4 460 922**
**US-A-4 494 142**

(73) Proprietor: **GENERAL INSTRUMENT CORPORATION,**
**767 Fifth Avenue, New York New York 10153(US)**

(72) Inventor: **Mundy, Wayne S., 32 Omega Street, Brampton Ontario(CA)**
Inventor: **Jeffers, John M., 141 Shaftesbury Street No. 3, Downsview Ontario(CA)**
Inventor: **Knight, Stephen P., 48 Timberill Crescent, Markham Ontario(CA)**

(74) Representative: **Allam, Peter Clerk et al, LLOYD WISE, TREGEAR & CO. Norman House 105-109 Strand, London WC2R 0AE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is concerned with direct broadcasting by satellite where television program material is provided via the satellite to the receivers of subscribers to the system. In this context television program material includes various direct broadcast satellite sevices as will be discussed below.

The TV programming provided by satellite broadcasting may be provided on a number of tiers whose accessibility by an individual subscriber can be regulated in accord with the services required by the individual subscriber, including impulse pay-per-view (IPPV) services. The present invention more particularly relates to the selected distribution of program material and especially, though not exclusively, to the provision of means whereby all receiver units within a given geographic area are simultaneously prevented from displaying a program, that is the program is to be blacked out for receivers in that geographic area. The invention relates to a transmission system, a receiver and a method for effecting such a selective distribution.

The availability of small, low-cost television receive-only terminals in recent years has resulted in an increasing demand for direct broadcast satellite services. Such services include Pay-TV, tele-conferencing, tele-seminar, private broadcast networks, and the like.

Unlike land lines and terrestrial microwave links, satellite transmissions lack privacy. Such transmissions can be received by any TV receive-only terminal whose antenna is situated to receive the satellite signals. Accordingly, secure transmission of video and audio programming and data signals is required to provide the privacy essential to many applications.

A simple example of a direct broadcast satellite network in which security is required is one which broadcasts television signals to paying subscribers. Since any receiver having an antenna in the broadcast area can receive the satellite signals, it is necessary that the signals be coded in a way which can be decoded only by the subscriber's receivers. Certain subscribers may have paid for certain programs or program groups, whereas others may have paid for other programs or program groups. The signals must then be further encoded such that subscribers who have paid for particular programs or groups of programs can receive same, while other subscribers cannot.

In addition, it may be desirable to design the system such that a particular subscriber can preview a program and then decide whether he or she wishes to watch the program and, hence, pay for the privilage. In such an impulse pay-per-view system, the decision of the subscriber must be recorded and communicated to a billing facility for appropriate billing. In such instances, the control signals to the subscriber's receiver instructing the receiver how to communicate with the billing office must be secure in order to eliminate the possibilities of theft of the service.

In the kind of direct broadcast satellite system in which the present invention is applicable, programming is distributed through a composite television signal which includes a plurality of levels of programming called tiers. Each tier carries a different variety of programming. A particular program may suit several tiers, much like a library index card listing having several possible topics of interest. Thus, a particular program may appear on one or more tiers.

Each tier is assigned a number. The tier number is represented by a bit stream. The bit stream is a series of zeros with a one at the bit corresponding to the tier number. This is referred to herein as the tier indication. If there are, for example, thirty-two tiers, tier number three is represented by a bit stream of two zeros, a one, and twenty-nine-zeros. Each program is distributed along with a program tier indication which is a similar bit stream with a one for the bit corresponding to the tier on which it is distributed. The program and the accompanying program tier indication are distributed to all receiver units.

Certain programs, whether paid for by subscription or on an impulse pay-per-view basis, may be considered by the subscriber as inappropriate for viewing by the household or certain members thereof. Such programs may, for instance, include violent or sexually explicit movies or the like. It is therefore desirable that the satellite system incorporate a means for blocking out the tiers on which such programs are distributed so that they cannot be decoded and displayed by the subscriber's receiver unit. It is preferable that objectionable programming be blocked even if the receiver unit is instructed to display the program as a pay-per-view item. One way to achieve this is to control individual receiver units by the system operator from the transmission end to block programs and provide a mechanism whereby the program tiers designated for blocking can be changed upon written or telephone communication by the subscriber with the system operator.

U.S. patent US-A 4 460 922 and International (PCT) specification WO-A 8 304 154 both discuss the general provision of TV programming in a number of tiers or levels, the authorizing of tiers at individual subscriber's receivers, and the ability to change tier authorizations by sending addressed messages to individual receivers. Such messages are sent as part of a composite TV signal that includes program content and data content, the data content including a program tier code assigned to the program content and messages containing information identifying individual receivers for which the respective messages are intended. It is the practice in subscription TV services such as described in these two specifications to encrypt or scramble the program content at the transmission end. The receiver units contain decoders for decrypting or unscrambling an authorized program. Access to a non-authorized program can be prevented or blocked by failure to activate the decoder in such a case. The U.S. patent discusses the provision of such services particularly in connection with "over-the-air" terrestrial broadcasting or cable TV distribution. Spec-

ification WO83/04 154 also discusses these services in connection with terrestrial broadcasting or cable TV but does mention the applicability of the system described to direct broadcasting by satellite (DBS). Neither of the specifications discusses provisions to be made when circumstances arise that call for selective geographical distribution or more generally when some number of the subscribers are to be prevented from receiving a particular program irrespective of the individual subscriber's choice.

There are certain instances where it is necessary to black out programming in a particular geographic area. For example, certain sporting events such as baseball games, football games, boxing matches, and the like, are provided to a satellite TV network for broadcast with the restriction that they not be distributed within the locality in which the sporting event is taking place, so as not to adversely affect attendance at the arena. It is therefore necessary that the satellite network have capability for blacking out selected programming in certain designated geographic areas.

In terrestrial broadcast television, local blackouts are achieved simply by not broadcasting the program over any local affiliate television station or cable network in the area to be blacked out. In a direct broadcast satellite delivery system, local area blackouts may be achieved by selectively addressing each subscriber receiver unit in the subject geographic area and then selectively preventing each of the addressed subscriber receiver units from displaying the particular program.

However, since there may be a great many (perhaps millions) different subscriber receiver units located within the geographic area to be blacked out, it may require many minutes or more to sequentially address all of them to achieve the appropriate blackout. A significant time lag, that is, more than tens of seconds, is undesirable since the program prior to the event to be blacked out is typically not blacked out. Thus, if the blackout sequence is begun prior to the transmission of the program to be blacked out, portions of the prior program will also be blacked out. On the other hand, if the sequence is begun at the beginning of the program to be blacked out, subscribers may find it objectionable to receive a portion of the local event and then to observe that the program is being blacked out.

The present invention is concerned with selective program distribution in a satellite TV broadcast system which can be used to provide a blackout of a program tier from selected receivers which is done at a single moment in time as far as the subscribers are concerned. To this end there will be described hereinafter how prior to the transmission of a program that is to be selectively blacked out, as from a given geographical area, the relevant individual receivers are separately addressed and supplied with a designation code which is stored in each receiver. Thereafter a message containing a global address that is responded to by at least all receivers that were previously selectively addressed is sent at the appropriate time. The globally addressed message contains the designation code and program tier data that in accord with the program tier code allocated to the program will block access to that program irrespective of any other program tier authorization data stored in the receiver, provided that the designation code in the globally addressed message matches that stored in the receiver as a result of its individual addressing. If on receipt of a globally-addressed message, a receiver finds a match between the received designation code and its stored designation code, the program tier data contained in the globally addressed message is stored as an overlay of the other authorization data already stored in the receiver. The latter data may include a level of tier data which relates to tiers to be permanently blocked in any event.

In one aspect the present invention provides a transmission system for distributing television program material to the receivers of subscribers to the system by means of satellite broadcasting in which, the system provides a composite TV signal comprising program content and a data content that includes a program tier code assigned to the program content and messages containing address information identifying individual receivers for which the respective messages are intended, characterised in that the system is adapted to:-

send a series of messages each containing a different receiver address and a common designation code for storage by each addressed receiver, and

send a further message containing a global address for addressing a group of receivers, a designation code and program tier data for causing storage of the program tier data by each receiver of the addressed group in which said common designation code is stored.

The transmission system is applicable to systems which are adapted to send messages each containing an individual address and program tier authorization data, for establishing those program tiers that are to be provided immediately along selection at the individual receiver and those which are to be provided upon completion of a further transaction upon selection. The latter tiers may be IPPV tiers requiring an action by the, subscriber whereby he can be billed for an IPPV service program.

The system may also be adapted to send messages each containing an individual receiver address and program tier blocking data, for establishing those tiers that are to be permanently blocked upon selection, for example at the choice of the subscriber as discussed above. The individually addressed messages relating to program tier blocking or program tier authorization or to the sending of the common designation code, may also contain further data identifying the type of message for controlling the action to be taken at the addressed receiver. The globally addressed messages, whose global address may encompass all subscribers, receivers, may also contain data identifying the type of message that it is.

The program tier authorization data, the program tier blocking data, and the program tier data for effecting selective distribution are each preferably sent as a series of bits, one for each tier, which are used to set a respective bit map memory area in the addressed receiver as will be further discussed below. Thus the state of a bit in the authorization data indicates the tier is immediately available or requires a further transaction; in the blocking data it indicates whether or not the relevant tier is to be permanently blocked. The blocking data thus overrides or overlays the program tier authorization data. The state of a bit in the selective distribution tier data also indicates whether the relevant program tier is to be blocked or not, at least for the duration for which the latter data remains operative. It thus also overlays or overrides program tier authorization data.

The transmission system may be further adapted to send subsequently a modifying message which is of the same format as the above-mentioned further message in that it comprises the global address, the same designation code contained in the further message, and fresh program tier data for replacing the program tier data contained in the further message and stored in each receiver of the addressed group in which the same, common, designation code is already stored. Consequently as applied to selective geographical distribution, the common designation code is sent to receivers in a geographical area and acts as a geographical area designation code. The associated program tier data of the further message blacks out the tier or tiers on which a program or programs not to be seen in that area are transmitted. The program tier data of the modifying message then sets the program tiers to be subsequently blacked out or may cause no tiers to be blocked if no further selective blacking out is required.

It will be realised from what has been said about the transmission system in accord with this invention that, the individual addressing of receivers to enter a common designation code may be performed prior to a program to be blacked out without affecting any then existing use of programs on tiers which will be required to be blocked. The global addressing of all the receivers allied to the use of the designation code can then be used to send the blackout tier data to all receivers simultaneously. The blackout can also be lifted simultaneously.

In another aspect the invention provides a receiver for television programs broadcast through a satellite television system which provides a composite TV signal comprising program content and a data content that includes a program tier code assigned to the program content and messages containing address information identifying the receivers for which the respective messages are intended, the receiver including a memory arrangement for storing program tier data defining those program tiers for which the receiver is authorized and for storing an address individual to the receiver for comparison with addresses contained in message portions of the received composite TV signal to enable selection of a message intended for the receiver, characterised in that said receiver further comprises:

means responsive to a message containing the receiver address and a designation code to cause storage of said designation code in a portion of the receiver memory arrangement, and

means responsive to a message containing a global address applicable to a group of receivers including the receiver, a designation code and program tier data, to compare the received designation code with the stored area designation code, and, if the codes match, to cause the program tier data contained in the received message to be entered in said memory arrangement.

The memory arrangement in the receiver includes a bit map memory area for the program tier authorization data. This memory map area has a respective bit position allocated to each program tier in the TV satellite system for defining program tiers which are to be provided immediately on selection and those which are to be provided on completion of a further transaction upon selection, e.g. IPPV services as already discussed.

The memory arrangement in the receiver may include a further bit map memory area having a respective bit position allocated to each program tier in the satellite TV system for defining the or those program tiers that are to be permanently blocked upon selection. As already outlined, both authorization tier data and blocking tier data may be sent over the system by a message addressed to the receiver and the messages preferably contain data defining the type of message. The receiver may thus include means responsive to data contained in and distinguishing messages relating to program tier authorization and to program tier blocking to cause the tier data to be stored in the relevant bit map memory area.

The receiver also preferably has a memory map area having a respective bit position for each program tier and allocated to receiving the program tier data contained in a globally addressed message that includes the receiver and which contains a designation code matching that stored in the receiver. This program tier data is stored in the receiver as a tier blackout map that overlays any other program tier authorization data. In this way selective distribution as by geographical area can be effected irrespective of the respective tier authorizations of the receivers within the area.

In a yet further aspect of the invention, there is provided a method of distributing television program material to the receivers of subscribers of a satellite television system in which the system provides a composite TV signal comprising program content and a data content that includes a program tier code assigned to the program content and messages containing address information identifying individual receivers for which the respective messages are intended, characterised by:

sending a series of messages each containing a different receiver address of a plurality of selected receivers and a common designation code for storage by each addressed receiver,

storing in each addressed receiver the common designation code;

sending a further message containing a global address for addressing all of the plurality of selected receivers,

a designation code and program tier data for determining tiers that are to be blocked;

comparing in each receiver responding to the global address, the designation code in the further message with the common designation code, if any, stored in the receiver and, if the designation codes match, storing the program tier data contained in the further message,

comparing in each receiver the program tier code assigned to a selected program with the stored program tier data obtained from such a further message and blocking or allowing access to the selected program in accord with the stored program tier data.

The method of the invention finds application to the selective distribution of programs such as to the blackout of receivers in a geographical area to a particular program. To this end the method can be implemented such that the series of messages contains the respective addresses of receivers in a selected geographical area, whereby the common designation code provides a geographical area designation code. The system may be so designed that the global address of the further message addresses all subscribers' receivers.

At some time later than the further message is sent, a modifying message may be sent containing a global address for addressing all of the previously selected receivers, the designation code that was contained in the further message and fresh program tier data. Each receiver that responds to the global address, responds also to the designation code in the modifying message and the stored designation code such that if the received and stored designation codes match, the fresh program tier data is stored to replace that contained in the further message.

The fresh program tier data may block no tiers so that there is no blackout. Thus by sending such a modifying message subsequent to a local blacked out program, the blackout can be lifted.

The foregoing method may be applied where each receiver previously stores program tier data relating to authorization for access to the different tiers of programs. In this case the storage of program tier data from the further message, or fresh program tier data from a subsequent modifying message, overlays the previously stored-program data. As already discussed, the program tier authorization data may be used to establish those programs which are to be provided immediately on selection at the receiver and those which are to be provided upon completion of a further transaction. As described above, the program tier authorization data is preferably stored in a bit map memory area of a memory in the receiver that has one bit allocated for each program tier. The authorization data in each receiver may have been provided by sending it in a message individually addressed to the receiver in question.

Also as previously discussed, the program tier data in the further message may be stored in a bit map memory area of a memory in the receiver having one bit allocated for each program tier. The program tier data in the further message may be sent as a series of bits, one for each program tier.

It will be appreciated that, while the above discussion of the invention has referred to sending one designation code to selected receivers, different designation codes can be supplied to different groups of receivers and then the different groups be sent respective messages containing the "blackout" tier data appropriate to the group.

The present invention will be further described in relation to a geographic blackout method for use in a direct broadcast satellite system, the description being taken together with the accompanying drawings, wherein like numerals refer to like parts, and in which:

Fig. 1 is a diagram schematically representing the blackout bit map memory, the blocking bit may memory, and authorization bit map memory of a subscriber receiver unit of the present invention;

Fig. 2 is a flow chart of the procedure whereby the blackout code memories of the subscriber receiver units in various geographic areas are set and reset;

Fig. 3 is a flow chart of the operations of the receiver unit in setting its designation code memory and blackout bit map memory;

Fig. 4 is a flow chart of the operations which permit a subscriber receiver unit to decide whether a particular program should be blacked out; and

Fig. 5 is a schematic diagram illustrating the composite television broadcast signal distributed through the direct broadcast satellite network in which the present invention is utalized.

Mention is made below of the sending of a data stream using encrypted messages. Further detail on encryption and decoding of messages for use in a network can be obtained from out co-pending European Patent Application No: 85307456.5 (publication No: 0 179 612 ).

The direct broadcast satellite network now to be discussed is designed to supply television programming to a large number of subscriber receiver units distributed in various geographic areas. Each geographic area may have a large number of subscriber receiver units contained therein.

Each of the subscriber units is supplied, via satellite, with a number of different programming tiers. Each subscriber, upon entering the network, obtains a receiver unit which includes a signal tuner and modulation section and an addressable controller-decoder for use in conjunction with the subscriber's television.

Each subscriber chooses one or more of the programming tiers to be received on a subscription basis. The subscriber pays the system operator a periodic fee, for example monthly, which entitles him/her to view the programs on the tiers he/she has selected and paid for. Other tiers of programming can be paid for on impulse on a pay-per-view basis. Programs eligible for viewing on an impulse pay-per-view basis are previewable by the subscriber by permitting the subscriber to view the beginning of the program, for example, the first five minutes thereof, after which the subscriber must decide whether to pay for the privilege of viewing the remainder of the program.

In order to view a program eligible for an impulse pay-per-view transaction, the subscriber enters a secret pass code on a keyboard associated with the tuning section of the receiver unit. The addressable controller-decoder connected therewith will enter certain information into a memory relating to the identification number of the program being viewed, the time and date of the viewing, and the cost which the subscriber will have to pay for the privilege of viewing the program. Periodically, the addressable controller-decoder will receive instructions from the system operator to forward the accumulated data relating to the previous impulse pay-per-view transactions and provide same to the system operator for billing purposes. This can be done in one of two ways. If the addressable controller-decoder has telephone communications capability, that is, provided with a modem connected to a telephone line, and the necessary circuitry to operate the modem, the controllable addressable decoder will call a computer located at the transmission end and, after the appropriate identification procedure, will transfer the information concerning the impulse pay-per-view transactions stored in the addressable controller-decoder memory to the computer at the transmission end. That computer will then periodically generate a bill which will be mailed to the subscriber.

If the addressable controller-decoder does not have telephone communications capability, a credit card type device can be utilized for billing purposes. The credit card type device is essentially a memory on a card which is inserted into a slot provided on the addressable controller-decoder. Upon receiving the appropriate commands from the transmission end, the addressable controller-decoder will transfer its stored information concerning the impulse pay-per-view transactions onto the card memory. The subscriber will then mail the card memory to the system operator who will then access the card memory to ascertain the impulse pay-per-view transactions and provide the subscriber with a bill in accordance therewith.

Certain programming, whether eligible through subscription or through impulse pay-per-view transaction, must be prevented from display on designated receiver units. Such programming may incorporate content which is objectionable for some reason or may relate to particular programming, such as sporting events, which are taking place locally and must be blacked out. In order to maintain attendance at such sporting events at a high level, the program is distributed with the restriction that the program will not be viewable with the geographic area in which it is taking place.

There will now be described a method in accordance with this invention for preventing the display of selected programming by designated receiver units. It is particularly adaptable for use in simultaneously blacking out particular programs in designated geographic areas.

In order to black out all the receiver units in a particular geographic area, it is normally necessary to access each unit and provide same with the necessary blackout instructions. Since there may be hundreds of thousands or even millions of receiver units in a particular geographic area, accessing each unit in order to provide it with blackout information will require a relatively long time. If instructions to black out programming on a particular tier are distributed prior to the commencement of the program to be blacked out, this may interrupt the viewing of the prior program, which is normally not blacked out, a result which is to be avoided. On the other hand, if the distribution of the blackout command information does not take place until the program to be blacked out commences, certain viewers will be able to view the beginning portion of the program and will be blacked out a few minutes into the program, which may cause annoyance.

The now proposed method overcomes these problems by providing each receiver unit and, particularly the addressable controller-decoder portion thereof, with a blackout bit map in a memory area for that purpose. This is done with the aid of a memory area for a receiver unit designation code. By transmitting a serie of messages each unit is individually addressed and provided with a designation code, in this case, a code which reflects the geographic location of the receiver unit. The designation code is stored in the unit. The units are then globally addressed by transmission of a further message which contains a selected designation code and a program tier data that indicates on or more tiers that are to be blacked on. The blackout tier indication represents a particular programming tier to be blacked out on all receiver units having the selected designation code. If the stored designation code matches the designation code being transmitted, the blackout tier indication is stored in the receiver blackout bit map memory. This takes place prior to the transmission of the program to be blacked out.

Each program is transmitted in association with data indicating the program tier allocated to that program. If the program is to be blacked out in a particular geographic area represented by a given designation code, the program tier indication will match the blackout tier indication previously stored in all receiver units having that stored designation code. Upon receiving a program, each receiver unit compares the program tier indication transmitted therewith and the blackout tier indication in its blackout bit map memory. If the indications match, the program cannot be displayed. Otherwise, the program is displayed as usual. Thus, all receivers in a selected geographic area will be blacked out to be prevented from displaying the program.

Each receiver unit also has a tier authorization memory in the form of an authorization bit map memory and a tier blocking memory in the form of a blocking bit map memory. Indications relating to programming tiers not selected for subscriptions are stored in the authorization bit map memory. Data relating to tiers to be blocked by the system operator are stored in the blocking bit map memory. Both the blackout tier memory map and the blocking memory map thus overlay or override the authorization tier memory map. Authorization tier data and blocking tier data are distributed in addressable portions of the data stream in the composite television signal in the same way as the designation code.

While the various bit map memory facilities are referred to herein as separate memories, it should be understood that same may, in reality, be different areas of the same memory circuit.

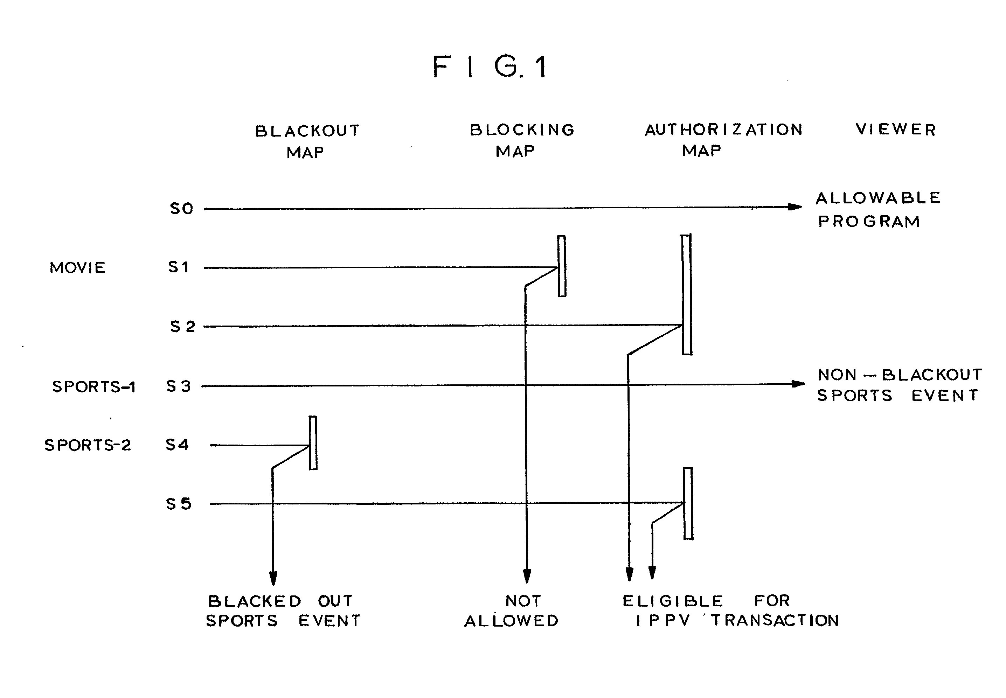

Fig. 1 graphically depicts the manner in which the authorization bit map memory, blocking bit map memory, and blackout bit map memory are utilized within the addressable controller-decoder. Each bit map is an array of bits equal to the number of programming tiers, for example, 32 bits corresponding to 32 programming tiers. Thus, each bit represents a tier. Each bit in each array is tested with each corresponding bit in each other array to determine whether programming on a selected tier may be displayed.

Only six tiers of programming, $S_0...S_5$, are shown for purposes of illustration, but it is understood that many more tiers of programming can be utilized. Programming tiers $S_0$ and $S_3$ are programming tiers which have been paid for by subscription and contain, for example, commercial programming which can be viewed without further action on the part of the subscriber.

Programming tiers $S_1$ and $S_2$, for example, contain "R" rated and "PG" rated movies thereon, respectively. Both programming tiers $S_1$ and $S_2$ are eligible for impulse pay-per-view transactions as the addressable controller-decoder has previously received instructions authorizing the viewing of these tiers on this basis. However, the subscriber does not wish to have certain members of the household view the "R" rated movies on programming tier $S_1$. This has been previously communicated to the system operator who has then provided the subscriber's addressable controller-decoder with particular commands such that the blocking bit map contained in the subscriber's addressable controller-decoder memory has been set to block the display of programming tier $S_1$, even if the appropriate passcode is entered into the controller which would normally permit the subscriber unit to display the program and charge the subscriber for the privilege.

Programming tiers $S_3$ and $S_4$ contain sports programs thereon. Programming tier $S_3$, like tier $S_0$, is part of the subscription and, hence, need not be authorized for impulse pay-per-view transactions. It is not blocked or blacked out and, therefore, can be viewed. However, the programming on tier $S_4$ has been blacked out of the geographic area in which the subscriber unit is situated. Accordingly, the addressable controller-decoder will not permit the programming in tier $S_4$ to be displayed.

The programming on tier $S_5$, like the programming on tier $S_2$, is eligible for impulse pay-per-view transactions. Since this programming has not been blocked and has not been blacked out, it can be viewed by the entrance of the appropriate passcode at the keyboard of the receiver unit. The program will then be displayed and the subscriber charged for the privilege.

Control data is distributed to the subscriber units through a data stream which is situated in consecutive horizontal blanking intervals within the composite television broadcast signal. The data stream is described in detail below. In general, the data stream includes a header packet which contains a group address, certain program related information, including a program tier indication for each program being distributed, and certain impulse pay-per-view information such as an identification number relating to a particular program eligible for an impulse pay-per-view transaction and the cost of viewing same. This type of information is generally applicable to all receiver units in the addressed group.

The data stream also includes a plurality of addressable packets containing encrypted messages applicable to the control of particular subscriber units within the addressed group. Each subscriber unit has an individual address number. An addressable packet is addressed to a particular subscriber unit by including therein the subscriber unit's individual address number. Only the subscriber unit with that individual address number can receive and decode the message in that addressed packet.

The addressed packet may contain a selected one of several different messages along with the information necessary for the particular addressed subscriber unit to decode the message. For example, a particular message may cause the addressed subscriber unit to load a designation code into its designation code memory. Another message may cause the storage of blackout tier indications into a blackout bit map memory. Other messages may cause an addressed receiver unit to be provided with authorization tier indications to set its authorization bit map memory, or with blocking tier indications to set its blocking bit map memory.

It is also possible to utilize an addressable packet to send a global message, that is, a message applicable to the control of all receiver units within the addressed group. The global message is sent in clear or unencrypted form. In this case, a global address, for example all ones, is utilized. Such a message, for instance, may be a command for all subscriber units in the group having a particular stored designation to perform a certain function.

The system thus far described is initialized by a series of messages separately addressing each subscriber unit in each group within the network and commanding each addressed subscriber unit to enter a particular designation code, contained within a message in the addressable packet, in its designation code memory. Different geographic areas are assigned different designation codes. Thus, all subscriber units in a particular geographic area will have the same designation code stored in their designation code memories.

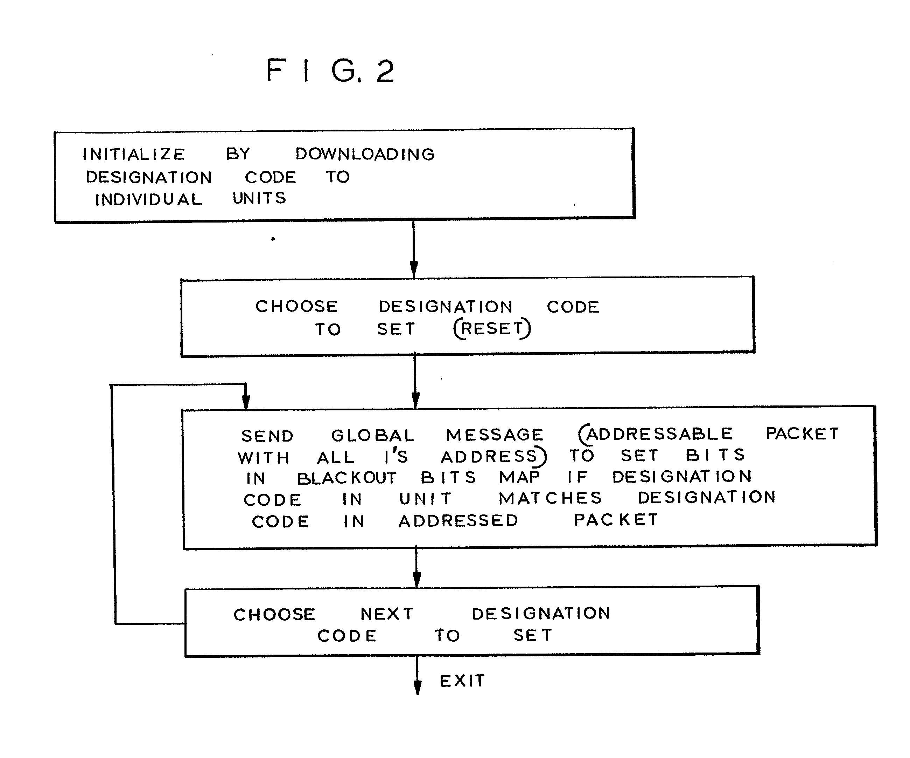

After the designation codes are stored in all subscriber units, each designation code is selected, in turn, and by means of a further, globally addressed message, the blackout bit map memory of each subscriber unit having the selected designation code is set (or reset). This is accomplished by sending a global message in an addressable packet of the data stream in which a global address, such as a series of ones, is contained commanding all subscriber units in the system to load a particular sequence of bits, which form a blackout tier indication, into their blackout bit map memory if the designation code previously stored in the unit matches the designation code in the message. After this occurs, the next designation code will be selected and a global message will be sent instructing all subscriber units having that designation code to set or reset their respective blackout bit map memories with a particular blackout tier indication. The process continues until the blackout bit map memories of all receivers in each geographic area have been set. This is illustrated in Fig. 2.

In this context the blackout tier indications and other tier indications such as authorization and blocking tier indications, refers to the data which indicates whether a particular tier is available or not. As will be further described below, each tier is allocated a bit of a set of data bits and the bit state indicates the status of that tier.

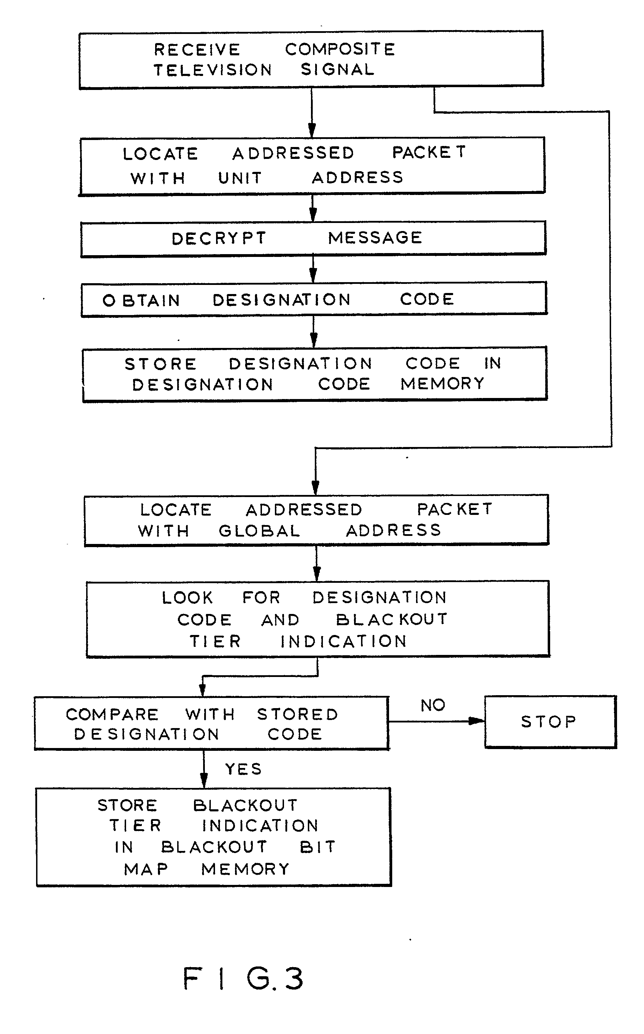

As illustrated in Fig. 3, each receiver unit receives the composite television signal and looks for an addressed packet with its unit address. Each addressed packet with a unit address contains a message type indication, an encrypted message, and decryption information. One message type represents a command to set the designation code memory with a designation code contained in the message. Other message types represent commands to set the authorization bit map memory, blocking bit map memory, or perform other functions. The receiver unit decrypts the message and performs the designated function, i.e., store the designation code in its designation code memory.

A global message, that is, an addressed packet with a global address will then be sent. The message contains a designation code and blackout tier indication in clear or unencrypted form. If the received designation code matches the designation code stored in the designation memory area, the receiver unit will store the blackout tier indication in its blackout bit map memory.

Each program broadcast over the composite television signal has a header packet associated therewith which contains the program tier indication associated with that program.

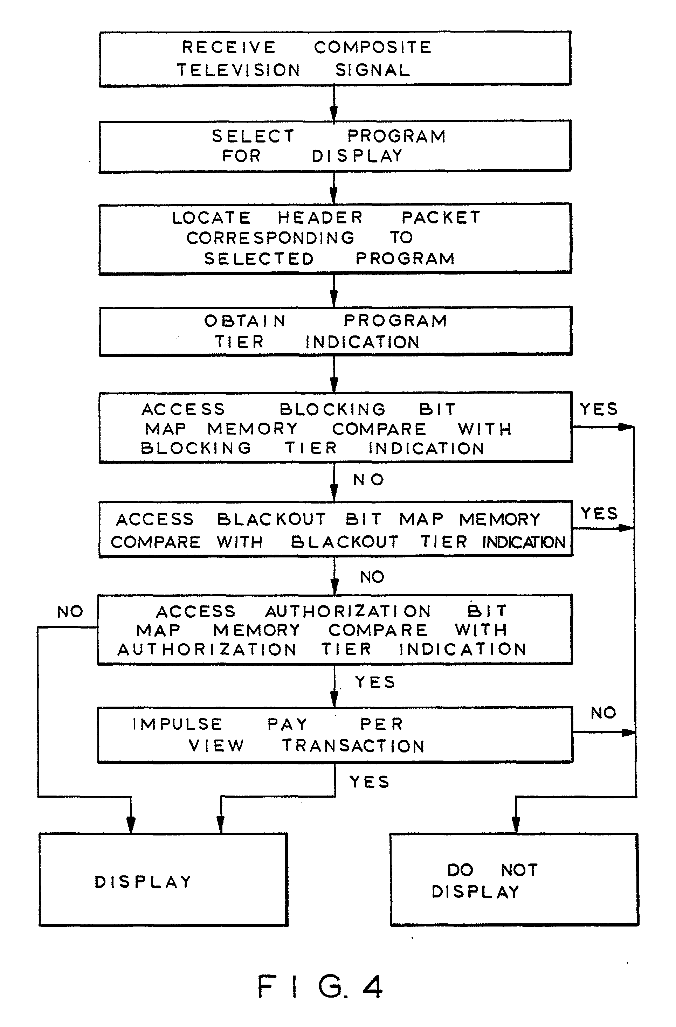

As illustrated in Fig. 4, when the composite television signal is received by the subscriber unit, the subscriber will select a program for display. The subscriber unit located at the header packet in the addressable data stream corresponding to the selected program and obtains the program tier indication therein. The subscriber unit will then access the program tier indication from the header with the stored blocking tier indication. If the indications match, that is, if there is a "one" bit at the same location, the program will be blocked and cannot be displayed by the receiver unit.

Next, the blackout bit map memory will be accessed and the program tier indication compared with the blackout tier indication. If the indications match, that is, if there is a "one" bit in the program tier indication at the same location as the "one" bit in the blackout bit map memory, the program will not be displayed.

Finally, the authorization bit map memory is accessed. If the program tier indication matches the authorization tier indication, an impulse pay-per-view transaction must take place before the program can be viewed. Otherwise, the program is within the subscription and can be displayed without further action on the part of the subscriber.

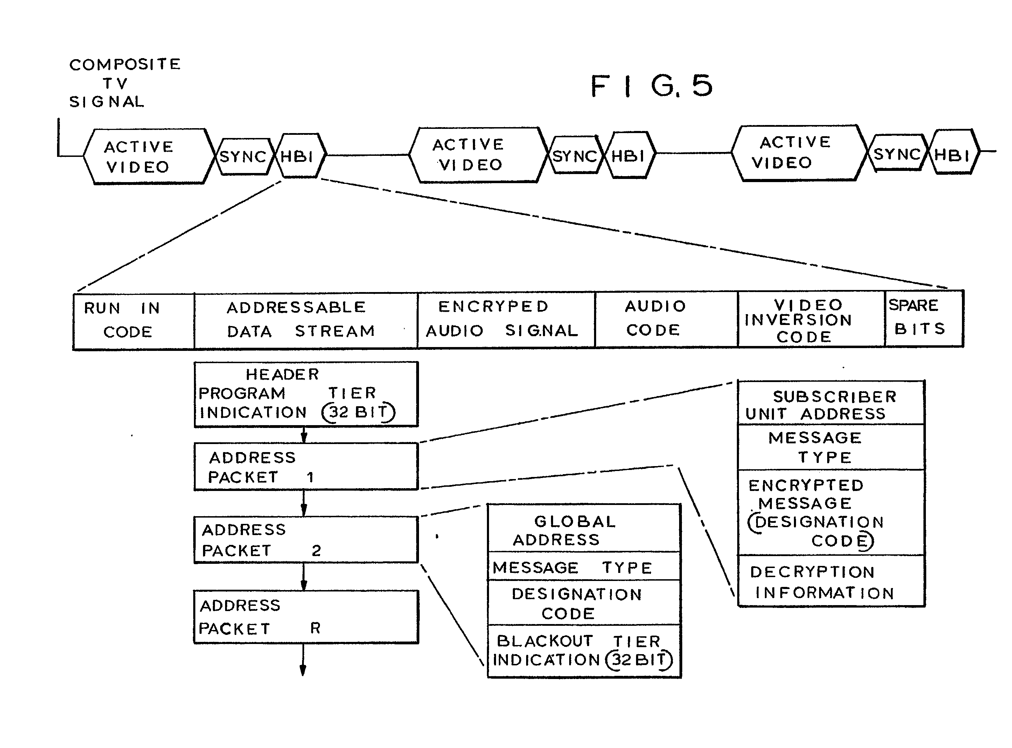

Fig. 5 schematically represents the type of composite TV signal distributed by the direct broadcast satellite network. This signal comprises a plurality of active video portions, sync portions, and horizontal blanking interval portions. A data stream, including digitized audio signals and control data, is inserted into consecutive horizontal blanking intervals of the composite television signal.

The data stream includes a run-in code portion, an addressable data stream portion, an encrypted audio signal portion, an audio code portion indicating whether the audio channels being broadcast are stereo or bilingual, a video inversion code required to descramble the video signals, and a spare bit portion. The addressable data stream portion includes a header packet for each program being distributed and a plurality of addressable packets. As mentioned above, global information may be contained in an addressable packet containing a global address, for example, all ones. Information relating to the control of specific receiver units is contained in addressable packets including the unique address number of the particular receiver unit.

Each of the addressable packets includes an address portion, which is either global in nature or specific to a particular subscriber. In packets addressed to specific subscriber units, the address portion is followed by an encrypted message and information which will enable the addressed subscriber unit to decode the message.

Encrypted messages of various types, containing a variety of different kinds of control data, can be distributed in this fashion. For purposes of this application, it is sufficient to understand that one type of encrypted message may be a command to the addressed subscriber unit to load a particular designation code into its designation code memory. Another type of encrypted message may be a command for the subscriber unit to load a particular blocking tier indication into its blocking bit map memory. Still another type of encrypted message may be a command to set the authorization bit map memory with an authorization tier indication.

One type of message is illustrated as addressable packet 1. This packet includes the subscriber unit address for one specific unit, an indication of the message type (i.e., command to set designation code memory), the message (designation code to be stored in memory), and the necessary information for the addressed unit to decrypt the message.

A globally addressed message is illustrated as addressable packet 2. This message contains a global address (meaning it is applicable to all receiver units in the system) and an indication of the message type (a command to set the blackout bit map memory if the designation code in the message matches the designation code previously stored in the designation code memory). This addressable packet also contains a message containing the designation code to be compared and the blackout tier indication to be stored.

After the broadcast of the program to be blacked out, a modifying message may be sent. This is another global message containing the appropriate designation code sent to all receiver units through the data stream. This global message commands all receiver units to reset their respective blackout bit map memories to zero, thereby erasing the blackout information. Once this occurs, the programming on the tier previously designated for blackout will be able to be viewed. In this manner, the blackout bit map memory can be set and reset as required.

While, for simplicity, the present application has discussed the blackout of a single program tier at a time, it should be appreciated that several tiers can be blacked out at the same time by distributing a blackout tier indication which includes "one" bits at locations representing several tiers. For example, blacking out tiers two and four would require a thirty-two bit stream with "ones" at the second and fourth bit. Thus, the term "indication" as used herein refers to a bit stream having ones in positions which correspond to one or more tier numbers.

It will now be appreciated that the method and system described permits all subscriber units located in a particular geographic area to black out a particular program upon the receipt of a given program tier indication associated with the program. This can occur because the particular subscriber units within the geographic area to be blacked out have previously been provided with a given blackout tier indication. The subscriber units within each geographic area have previously been loaded with designation codes representing the area in which the unit is located. Since the designation codes and the blackout tier indications are distributed and stored prior to the broadcast of the programming to be blacked out, this can be done over a relatively long time without disrupting the operation of the system. Setting up the system in this way permits the program to be blacked out in all receiver units within the designated geographic area simultaneously.

**Claims**

1. A transmission system for distributing television program material to the receivers of subscribers to the system by means of satellite broadcasting in which, the system provides a composite TV signal comprising program content and a data content that includes a program tier code assigned to the program content and messages containing address information identifying individual receivers for which the respective messages are intended, characterised in that the system is adapted to:

send a series of messages each containing a different receiver address and a common designation, code for storage by each addressed receiver, and

send a further message containing a global address for addressing a group of receivers, a designation code and program tier data for causing storage of the program tier data by each receiver of the addressed group in which said common designation code is stored.

2. A system as claimed in Claim 1 which is adapted to send messages each containing an individual receiver address and program tier authorization data, for establishing those program tiers that are to be provided immediately on selection at the individual receiver and those which are to be provided upon completion of a further transaction upon selection.

3. A system as claimed in Claim 2 in which the program tier authorization data is provided as a series of bits, one for each program tier, the state of the bit allocated to each program tier defining the authorization.

4. A system as claimed in Claim 1, 2 or 3 which is adapted to send message portions each containing an individual receiver address and program tier blocking data, for establishing those program tiers that are to be permanently blocked upon selection.

5. A system as claimed in Claim 4 in which the program tier blocking data is provided as a series of bits, one for each program tier, the state of the bit allocated to each program tier defining the blocking or not of that program tier.

6. A system as claimed in Claim 4 or 5 and, Claim 2 or Claim 3 in which said messages containing program tier authorization data and said messages containing program tier blocking data each contain data defining the program tier data type contained in the message.

7. A system as claimed in any one of Claims 1 to 6 in which said further message contains the associated program tier data as a series of bits, one for each program tier, the state of the bit allocated to each program tier defining whether or not the program tier is to be blocked upon selection.

8. A system as claimed in any preceding claim which is adapted to send a modifying message at a time later than the sending of said further message, which modifying message comprises the global address and designation code contained in said further message, and fresh program tier data for replacing the program tier data contained in said further message and stored in each receiver of the addressed group in which said common designation code is stored.

9. A system as claimed in Claim 8 in which the program tier data contained in said modifying message blocks no program tiers.

10. A system as claimed in any one of Claims 1 to 9 in which the information contained in messages addressed to individual receivers is sent in an encrypted form and the information contained in globally addressed messages is sent in clear.

11. A receiver for television programs broadcast through a satellite television system which provides a composite TV signal comprising program content and a data content that includes a program tier code assigned to the program content and messages containing address information identifying the receivers for which the respective messages are intended, the receiver including a memory arrangement for storing program tier data defining those program tiers for which the receiver is authorized and for storing an address individual to the receiver for comparison with addresses contained in message portions of the received composite TV signal to enable selection of a message intended for the receiver, characterised in that said receiver further comprises:

means responsive to a message containing the receiver address and a designation code to cause storage of said designation code in a portion of the receiver memory arrangement, and

means responsive to a message containing a global address applicable to a group of receivers including the receiver designation code and program tier data, to compare the received designation code with the stored area designation code, and, if the codes match, to cause the program tier data contained in the received message to be entered in said memory arrangement.

12. A receiver as claimed in Claim 11 in which said memory arrangement comprises a bit memory map area for said program tier authorization data, said memory map area having a respective bit position allocated to each program tier in the TV satellite system for defining program tiers which are to be provided immediately on selection and those which are to be provided upon completion of a further transaction upon selection.

13. A receiver as claimed in Claim 11 or 12 in which said memory arrangement includes a further bit memory map area having a respective bit position allocated to each program tier in the satellite TV system for defining the or those program tiers that are to be permanently blocked upon selection.

14. A receiver as claimed in Claim 13 further comprising means responsive to data contained in and distinguishing messages relating to program tier authorization and messages relating to permanent program tier blocking to cause the tier data to be stored in the relevant bit memory map area.

15. A receiver as claimed in any one of Claims 11 to 14 in which said memory arrangement comprises a bit memory map area having a respective bit position for each program tier and allocated to receiving said program tier data contained in a globally addressed message that includes the receiver and which contains a designation code matching that stored in the receiver to define a tier blackout map that overlays any other program tier authorization data.

16. A receiver as claimed in any one of Claims 11 to 15 in which the receiver includes means for decrypting encrypted information in messages containing the individual address of the receiver.

17. A method of distributing television program material to the receivers of subscribers of a satellite television system in which the system provides a composite TV signal comprising program content and a data content that includes a program tier code assigned to the program content and messages containing address information identifying individual receivers for which the respective messages are intended, characterised by:

sending a series of messages each containing a different receiver address of a plurality of selected receivers and a common designation code for storage by each addressed receiver,

storing in each addressed receiver the common designation code;

sending a further message containing a global address for addressing all of the plurality of selected receivers, a designation code and program tier data for determining tiers that are to be blocked;

comparing in each receiver responding to the global address, the designation code in the further message with the common designation code, if any, stored in the receiver and, if the designation codes match, storing the program tier data contained in the further message,

comparing in each receiver the program tier code assigned to a selected program with the stored program tier data obtained from such a further message and blocking or allowing access to the selected, program in accord with the stored program tier data.

18. A method as claimed in Claim 17 in which the series of messages contains the respective addresses of receivers in a selected geographical area, whereby the common designation code provides a geographical area designation code.

19. A method as claimed in Claim 17 or 18 in which the global address selects all subscribers' receivers.

20. A method as described in any one of Claims 17 to 19 further comprising the sending at some time later than the sending of said further message, a modifying message containing a global address for addressing all of said plurality of selected receivers, said designation code contained in said further message and fresh program tier data; and

comprising, in each receiver, responding to the global address, the designation code in the modifying message and the stored designation code, and, if the received and stored designation codes match, storing the fresh program tier data in the receiver to replace that contained in said further message.

21. A method as claimed in Claim 20 in which said fresh program tier data blocks no tiers.

22. A method as claimed in any one of Claims 17 to 21 in which each receiver previously stores program tier data relating to authorization for access to the different tiers of programs, and in which the storage of program tier data from said further message, or from said fresh program tier data, overlays the previously stored program tier data.

23. A method as claimed in Claim 22 in which said previously stored program tier authorization data establishes those program tiers which are to be provided immediately on selection at the receiver and those which are to be provided upon completion of a further transaction upon selection.

24. A method as claimed in Claim 23 in which for each receiver said program tier authorization data is stored in a bit map memory area of a memory in the receiver that has one bit allocated for each program tier.

25. A method as claimed in Claim 23 or 24 in which the program tier authorization data for each receiver is provided by sending a message containing the data and the individual address of the receiver.

26. A method as claimed in any one of Claims 17 to 25 in which each subscriber's receiver includes a bit map memory area of a memory in the receiver for storing the program tier data contained in such a further message and which has one bit allocated for each program tier.

27. A method as claimed in Claim 26 in which the program tier data contained in said further message is sent as a series of bits, one of each program tier.

## Patentansprüche

1. Übertragungssystem zur Verteilung von Fernsehprogrammaterial an die Empfänger von Teilnehmern am System mittels Satellitenrundfunk, in welchem das System ein Fernsehsignalgemisch mit Programminhalt und einem Dateninhalt liefert, das einen dem Programminhalt zugeordneten Programmebenenkode enthält und Nachrichten, die Einzelempfänger, für die die entsprechenden Nachrichten bestimmt sind, identifizierende Adreßinformationen enthalten, dadurch gekennzeichnet, daß das System dafür eingerichtet ist:

eine Reihe von Nachrichten zu senden, die jeweils eine unterschiedliche Empfängeradresse und einen gemeinsamen Bestimmungskode für die Speicherung durch jeden adressierten Empfänger enthalten, und

eine weitere Nachricht zu senden, die eine globale Adresse zu Adressierung einer Empfängergruppe, einen Bestimmungskode und Programmebenendaten zum Bewirken der Speicherung der Programmebenendaten durch jeden Empfänger der adressierten Gruppe, in dem der besagte gemeinsame Bestimmungskode gespeichert ist, enthält

2. System nach Anspruch 1, dadurch gekennzeichnet, daß es dafür eingerichtet ist, Nachrichten zu senden, die jeweils eine Einzelempfängeradresse und Programmebenenberechtigungsdaten enthalten, zum Bestimmen jener Programmebenen, die sofort bei Anwahl am Einzelempfänger bereitzustellen sind und derjenigen, die bei Vollendung einer weiteren Transaktion bei Anwahl bereitzustellen sind.

3. System nach Anspruch 2, dadurch gekennzeichnet, daß die Programmebenenberechtigungsdaten als eine Serie von Bits geliefert werden, je Programmebene eines, wobei der Zustand des jeder Programmebene zugeordneten Bits die Berechtigung definiert.

4. System nach Anspruch 1, 2 oder 3, dadurch gekennzeichnet, daß es dafür eingerichtet ist, Nachrichtenteile zu senden, die jeweils eine Einzelempfängeradresse und Programmebenenblockierungsdaten enthalten, um diejenigen Programmebenen zu bestimmen, die bei Anwahl dauerhaft zu blockieren sind.

5. System nach Anspruch 4, dadurch gekennzeichnet, daß die Programmebenenblockierungsdaten als eine Serie von Bits geliefert werden, je Programmebene eines, wobei der Zustand des jeder Programmebene zugeordneten Bits die Blockierung oder Nicht-Blockierung dieser Programmebene definiert.

6. System nach Anspruch 4 oder 5 und Anspruch 2 oder Anspruch 3, dadurch gekennzeichnet, daß die besagten Programmebenenberechtigungsdaten enthaltenden Nachrichten und Programmebenenblockierungsdaten enthaltenden Nachrichten jeweils die in der Nachricht enthaltene Programmebenendatenart definierende Daten enthalten.

7. System nach einem der Ansprüche 1 bis 6, dadurch gekennzeichnet, daß die besagte weitere Nachricht die zugeordneten Programmebenendaten als eine Serie von Bits enthält, je Programmebene eines, wobei der Zustand des jeder Programmebene zugeordneten Bits definiert, ob die Programmebene bei Anwahl zu blockieren ist oder nicht.

8. System nach einem vorhergehenden Anspruch, dadurch gekennzeichnet, daß es dafür eingerichtet ist, zu einer späteren Zeit als die Sendung der besagten weiteren Nachricht eine Änderungsnachricht zu senden, die die in der besagten weiteren Nachricht enthaltene Globaladresse und Bestimmungskode und frische Programmebenendaten zum Ersetzen der in der besagten weiteren Nachricht enthaltenen und in jedem Empfänger der adressierten Gruppe, in dem der besagte gemeinsame Bestimmungskode gespeichert ist, gespeicherten Programmebenendaten umfaßt.

9. System nach Anspruch 8, dadurch gekennzeichnet, daß die in der besagten Änderungsnachricht enthaltenen Programmebenendaten keine Programmebenen blockieren.

10. System nach einem der Ansprüche 1 bis 9, dadurch gekennzeichnet, daß die in an Einzelempfänger adressierte Nachrichten enthaltenen Informationen in verschlüsselter Form gesendet werden und die in globaladressierten Nachrichten enthaltenen Informationen im Klartext gesendet werden.

11. Empfänger für Fernsehprogramme, die durch ein Satellitenfernsehsystem übertragen werden, das ein Fernsehsignalgemisch mit Programminhalt und einem Dateninhalt liefert, das einen dem Programminhalt zugeordneten Programmebenenkode und die Empfänger, für die die entsprechenden Nachrichten bestimmt sind, identifizierende Adreßinformationen enthaltende Nachrichten enthält, wobei der Empfänger eine Speicheranordnung zum Speichern von Programmebenendaten enthält, die diejenigen Programmebenen definieren, für die der Empfänger berechtigt ist, und zum Speichern einer empfängerindividuellen Adresse zum Vergleich mit in Nachrichtenteilen des empfangenen Fernsehsignalgemischs enthaltenen Adressen zum Ermöglichen der Anwahl einer für den Empfänger bestimmten Nachricht, dadurch gekennzeichnet, daß der besagte Empfänger weiterhin umfaßt:

auf eine die Empfängeradresse und einen Bestimmungskode enthaltende Nachricht ansprechende Mittel zum Bewirken der Speicherung des besagten Bestimmungskodes in einem Teil der Empfängerspeicheranordnung, und

auf eine eine auf eine Empfängergruppe anwendbare Globaladresse enthaltende Nachricht einschließlich des Empfängerbestimmungskodes und Programmebenendaten ansprechende Mittel zum Vergleichen des empfangenen Bestimmungskodes mit dem gespeicherten Bereichsbestimmungskode und zum Bewirken, daß die in der empfangenen Nachricht enthaltenen Programmebenendaten bei übereinstimmenden Koden in die besagte Speicheranordnung eingegeben werden.

12. Empfänger nach Anspruch 11, dadurch gekennzeichnet, daß die besagte Speicheranordnung einen Bitspeicherabbildungsbereich für die besagten Programmebenenberechtigungsdaten umfaßt, wobei der besagte Speicherabbildungsbereich eine jeder Programmebene im Fernsehsatellitensystem zugeordnete entsprechende Bitstellung aufweist, zum Definieren von Programmebenen, die sofort bei Anwahl bereitzustellen sind und derjenigen, die bei Vollendung einer weiteren Transaktion bei Anwahl bereitzustellen sind.

13. Empfänger nach Anspruch 11 oder 12, dadurch gekennzeichnet, daß die besagte Speicheranordnung einen weiteren Bitspeicherabbildungsbereich enthält, in dem jeder Programmebene im Satellitenfernsehsystem eine entsprechende Bitstellung zugeordnet ist, zum Definieren der oder jener Programmebenen, die bei Anwahl dauerhaft zu blockieren sind.

14. Empfänger nach Anspruch 13, weiterhin gekennzeichnet durch auf in auf Programmebenenberechtigung bezogenen Nachrichten und auf dauerhafte Programmebenenblockierung bezogenen Nachrichten enthaltene und diese kennzeichnende Daten ansprechende Mittel, um zu bewirken, daß die Ebenendaten in dem entsprechenden Bitspeicherabbildungsbereich gespeichert werden.

15. Empfänger nach einem der Ansprüche 11 bis 14, dadurch gekennzeichnet, daß die besagte Speicheranordnung einen Bitspeicherabbildungsbereich umfaßt, der eine entsprechende Bitstellung für jede Programmebene besitzt und dem Empfang der besagten Programmebenendaten zugeordnet ist, die in einer globaladressierten Nachricht enthalten sind, die den Empfänger einschließt und die einen Bestimmungskode enthält, der mit dem im Empfänger gespeicherten übereinstimmt, um eine Ebenenausblendabbildung zu definieren, die allen anderen Programmebenenberechtigungsdaten überlagert ist.

16. Empfänger nach einem der Ansprüche 11 bis 15, dadurch gekennzeichnet, daß der Empfänger Mittel zum Entschlüsseln von verschlüsselten Informationen in die Einzeladresse des Empfängers enthaltenden Nachrichten enthält.

17. Verfahren zur Verteilung von Fernsehprogrammaterial an die Empfänger von Teilnehmern an einem Satellitenfernsehsystem, in dem das System ein Fernsehsignalgemisch liefert, das Programminhalt und einen Dateninhalt umfaßt, der einen dem Programminhalt zugeordneten Programmebenenkode und Einzelempfänger, für die die entsprechenden Nachrichten bestimmt sind, identifizierende Adreßinformationen enthaltende Nachrichten einschließt, gekennzeichnet durch:

Senden einer Serie von Nachrichten die jeweils eine unterschiedliche Empfängeradresse einer Mehrzahl von ausgewählten Empfängern und einen gemeinsamen Bestimmungskode für die Speicherung durch jeden adressierten Empfänger enthalten,

Speichern des gemeinsamen Bestimmungskodes in jedem adressierten Empfänger;

Senden einer weiteren eine globale Adresse zum Adressieren aller einer Mehrzahl von ausgewählten Empfängern, einen Bestimmungskode und Programmebenendaten zum Bestimmen von zu blockierenden Ebenen enthaltenden Nachricht;

Vergleichen in jedem auf die Globaladresse ansprechenden Empfänger des Bestimmungskodes in der weiteren Nachricht mit dem gemeinsamen im Empfänger gespeicherten Bestimmungskode, so vorhanden, und Speichern der in der weiteren Nachricht enthaltenden Programmebenendaten bei übereinstimmenden Bestimmungskoden, Vergleichen in jedem Empfänger des einem ausgewählten Programm zugeordneten Programmebenenkodes mit den von einer solchen weiteren Nachricht erhaltenen gespeicherten Programmebenendaten und Blockieren oder Gewähren von Zugriff auf das angewählte Programm entsprechend den gespeicherten Programmebenendaten.

18. Verfahren nach Anspruch 17, dadurch gekennzeichnet, daß die Serie von Nachrichten die entsprechenden Adressen von Empfängern in einem ausgewählten geographischen Bereich enthält, womit der gemeinsame Bestimmungskode einen geographischen Bereichsbestimmungskode bietet.

19. Verfahren nach Anspruch 17 oder 18, dadurch gekennzeichnet, daß die Globaladresse alle Teilnehmerempfänger anwählt.

20. Verfahren nach einem der Ansprüche 17 bis 19, weiterhin gekennzeichnet durch das Senden zu einer späteren Zeit als das Senden der besagten weiteren Nachricht einer eine Globaladresse zur Adressierung aller der besagten Mehrzahl von angewählten Empfängern, besagten in der besagten weiteren Nachricht enthaltenen, Bestimmungskode und frische Programmebenendaten enthaltenen, Änderungsnachricht; und

gekennzeichnet, in jedem Empfänger, durch das Ansprechen auf die Globaladresse, den Bestimmungskode in der Änderungsnachricht und dem gespeicherten Bestimmungskode und Speichern der frischen Programmebenendaten im Empfänger zum Ersetzen der in der besagten weiteren Nachricht enthaltenen bei Übereinstimmung zwischen den empfangenen und gespeicherten Bestimmungskoden.

21. Verfahren nach Anspruch 20, dadurch gekennzeichnet, daß die besagten frischen Programmebenendaten keine Ebenen blockieren.

22. Verfahren nach einem der Ansprüche 17 bis 21, dadurch gekennzeichnet, daß jeder Empfänger vorher auf Berechtigung zum Zugriff auf die verschiedenen Programmebenen bezogene Programmebenendaten speichert und daß die vorher gespeicherten Programmebenendaten durch die Speicherung von Programmebenendaten von der besagten weiteren Nachricht oder von besagten frischen Programmebenendaten überlagert werden.

23. Verfahren nach Anspruch 22, dadurch gekennzeichnet, daß die besagten vorher gespeicherten Programmebenenberechtigungsdaten diejenigen Programmebenen, die sofort bei Anwahl am Empfänger bereitzustellen sind und diejenigen, die bei Vollendung einer weiteren Transaktion bei Anwahl bereitzustellen sind, bestimmt.

24. Verfahren nach Anspruch 23, dadurch gekennzeichnet, daß für jeden Empfänger die besagten Programmebenenberechtigungsdaten in einem Bitabbildungsspeicherbereich eines Speichers im Empfänger gespeichert werden, in dem jeder Programmebene ein Bit zugeordnet wird.

25. Verfahren nach Anspruch 23 oder 24, dadurch gekennzeichnet, daß die Programmebenenberechtigungsdaten für jeden Empfänger durch Senden einer die Daten und die Einzeladresse des Empfängers enthaltenden Nachricht bereitgestellt werden.

26. Verfahren nach einem der Ansprüche 17 bis 25, dadurch gekennzeichnet, daß jeder Teilnehmerempfänger einen Bitabbildungsspeicherbereich eines Speichers im Empfänger zum Speichern der in einer solchen weiteren Nachricht enthaltenen Programmebenendaten enthält, in dem jeder Programmebene ein Bit zugeordnet ist.

27. Verfahren nach Anspruch 26, dadurch gekennzeichnet, daß die in der besagten weiteren Nachricht enthaltenen Programmebenendaten als eine Serie von Bits, je Programmebene eines, gesendet werden.

## Revendications

1. Système de transmission pour la distribution de programmes de télévision aux récepteurs d'abonnés à ce système, par la voie de la télédiffusion par satellite dans laquelle le système fournit un signal de télévision composite comprenant un contenu de programmes et un contenu de données qui comprend un code à étages de programmes attribué au contenu de programmes et des messages contenant de l'information d'adresse identifiant des récepteurs individuels auxquels les messages respectifs sont destinés, caractérisé en ce qu'il est à même :
   d'émettre une série de messages contenant chacun une adresse de récepteur différente et un code de désignation commun en vue d'un stockage par chaque récepteur adressé, et
   d'émettre un autre message contenant une adresse globale pour adresser un groupe de récepteurs, un code de désignation et des données d'étages de programmes pour provoquer le stockage des données d'étages de programmes par chaque récepteur du groupe adressé dans lequel le code de désignation commun est stocké.

2. Système suivant la revendication 1, qui est à même d'émettre des messages contenant chacun une adresse de récepteur individuel et des données d'autorisation d'étages de programmes, pour établir les étages de programmes qui doivent être obtenus immédiatement lors d'une sélection au récepteur individuel et les étages qui doivent être obtenus au terme d'une autre transaction lors de la sélection.

3. Système suivant la revendication 2, dans lequel les données d'autorisation d'étages de programmes sont fournies sous la forme d'une série de bits, un pour chaque étage de programme, l'état du bit attribué à chaque étage de programme définissant l'autorisation.

4. Système suivant la revendication 1, 2 ou 3 qui est à même d'émettre des parties de messages contenant chacune une adresse de récepteur individuel et des données de blocage d'étages de programmes pour établir les étages de programmes qui doivent être bloqués de manière permanente lors de la sélection.

5. Système suivant la revendication 4, dans lequel les données de blocage d'étages de programmes sont fournies sous la forme d'une série de bits, un pour chaque étage de programme, l'état du bit attribué à chaque étage de programme définissant le blocage ou le non-blocage de cet étage de programme.

6. Système suivant la revendication 4 ou 5 et 2 ou 3, dans lequel les messages contenant des données d'autorisation d'étages de programmes et les messages contenant des données de blocage d'étages de programmes contiennent chacun des données définissant le type de données d'étages de programmes contenues dans le message.

7. Système suivant l'une quelconque des revendications 1 à 6, dans lequel l'autre message contient les données d'étages de programmes associées sous la forme d'une série de bits, un pour chaque étage de programme, l'état du bit attribué à chaque étage de programme déterminant si l'étage de programme doit ou ne doit pas être bloqué lors de la sélection.

8. Système suivant l'une quelconque des revendications précédentes, qui est prévu pour émettre un message modificateur à un moment postérieur à l'émission de l'autre message, ce message modificateur comprenant l'adresse globale et le code de désignation contenu dans l'autre message, et des données d'étages de programmes fraîches pour remplacer les données d'étages de programmes contenues dans l'autre message et stockées dans chaque récepteur du groupe adressé dans lequel le code de désignation commun est stocké.

9. Système suivant la revendication 8, dans lequel les données d'étages de programmes contenues dans le message modificateur ne bloquent aucun étage de programme.

10. Système suivant l'une quelconque des revendications 1 à 9, dans lequel l'information contenue dans des messages adressés à des récepteurs individuels est émise sous une forme cryptée et l'information contenue dans des messages adressés globalement est émise en clair.

11. Récepteur pour programmes de télévision diffusés par l'intermédiaire d'un système de télévision par satellite, qui fournit un signal de télévision composite comprenant un contenu de programmes et un contenu de données qui comprend un code à étages de programmes attribué au contenu de programmes et des messages contenant de l'information d'adresse identifiant les récepteurs auxquels les messages respectifs sont destinés, le récepteur comprenant un montage de mémoire pour stocker des données d'étages de programmes définissant les étages de programmes pour lesquels le récepteur est autorisé et pour stocker une adresse propre au récepteur en vue de la comparer à des adresses contenues dans des parties de messages du signal de télévision composite reçu pour permettre la sélection d'un message destiné au récepteur, caractérisé en ce que le récepteur comprend, en outre:

des moyens sensibles à un message contenant l'adresse du récepteur et un code de désignation pour provoquer le stockage du code de désignation dans une partie du montage de mémoire du récepteur, et

des moyens réagissant à un message contenant une adresse globale applicable à un groupe de récepteurs comprenant le code de désignation de récepteur et des données d'étages de programmes, afin de comparer le code de désignation reçu au code de désignation de zone stocké et, si les codes concordent, pour amener les données d'étages de programmes contenues dans le message reçu à être introduites dans le montage de mémoire.

12. Récepteur suivant la revendication 11, dans lequel le montage de mémoire comprend une zone de table d'implantation de bits pour les données d'autorisation d'étages de programmes, la zone de table d'implantation comportant une position de bit respective attribuée à chaque étage de programme dans le système à satellite de télévision afin de définir des étages de programmes qui doivent être obtenus immédiatement lors de la sélection et des étages qui doivent être obtenus au terme d'une autre transaction lors de la sélection.

13. Récepteur suivant la revendication 11 ou 12, dans lequel le montage de mémoire comprend une autre zone de table d'implantation de bits comportant une position de bit correspondante attribuée à chaque étage de programme dans le système de télévision par satellite afin de définir le ou les étages de programmes qui doivent être bloqués de manière permanente lors de la sélection.

14. Récepteur suivant la revendication 13, comprenant, en outre, des moyens réagissant à des données contenues dans des messages et distinguant des messages se rapportant à une autorisation d'étages de programmes et des messages se rapportant au blocage permanent d'étages de programmes pour amener les données d'étages à être stockées dans la zone de table d'implantation de bits correspondante.

15. Récepteur suivant l'une quelconque des revendications 11 à 14, dans lequel le montage de mémoire comprend une zone de table d'implantation de bits comportant une position de bit respective destinée à chaque étage de programme et attribuée de manière à recevoir les données d'étages de programmes contenues dans un message adressé globalement qui comprend le récepteur et qui contient un code de désignation correspondant à celui stocké dans le récepteur pour définir une carte d'occultation d'étages qui supplante toute autre donnée d'autorisation d'étages de programmes.

16. Récepteur suivant l'une quelconque des revendications 11 à 15, dans lequel le récepteur comprend des moyens pour décrypter des informations chiffrées en des messages contenant l'adresse individuelle du récepteur.

17. Procédé pour distribuer des programmes de télévision aux récepteurs d'abonnés d'un système de télévision par satellite, dans lequel le système fournit un signal de télévision composite comprenant un contenu de programmes et un contenu de données qui comprend un code d'étages de programmes attribué au contenu de programmes et des messages contenant de l'information d'adresse identifiant des récepteurs individuels auxquels les messages respectifs sont destinés, caractérisé par:

l'émission d'une série de messages contenant chacun une adresse de récepteur différente parmi plusieurs récepteurs sélectionnés et un code de désignation commun en vue d'un stockage par chaque récepteur adressé;

le stockage dans chaque récepteur adressé du code de désignation commun;

l'émission d'un autre message contenant une adresse globale pour adresser tous les récepteurs parmi les divers récepteurs sélectionnés, un code de désignation et des données d'étages de programmes pour déterminer des étages qui doivent être bloqués;

la comparaison dans chaque récepteur réagissant à l'adresse globale du code de désignation dans l'autre message et du code de désignation commun, éventuellement stocké dans le récepteur et, si les codes de désignation concordent, le stockage des données d'étages de programmes contenues dans l'autre message;

la comparaison dans chaque récepteur du code d'étage de programme attribué à un programme sélectionné avec les données d'étages de programmes stockées obtenues à partir de cet autre message et le blocage ou l'autorisation d'accès au programme sélectionné en accord avec les données d'étages de programmes stockées.

18. Procédé suivant la revendication 17, dans lequel la série de messages contient les adresses respectives de récepteurs dans une zone géographique choisie, de sorte que le code de désignation commun fournit un code de désignation de zone géographique.

19. Procédé suivant la revendication 17 ou 18, dans lequel l'adresse globale sélectionne tous les récepteurs d'abonnés.

20. Procédé suivant l'une quelconque des revendications 17 à 19, comprenant, en outre, l'émission à un certain moment postérieur à l'émission de l'autre message, d'un message modificateur contenant une adresse globale pour adresser tous les divers récepteurs sélectionnés, le code de désignation contenu dans l'autre message et des données d'étages de programmes fraîches, et

comprenant, dans chaque récepteur, une réaction à l'adresse globale, au code de désignation dans le message modificateur et au code de désignation stocké et, si les codes de désignation reçu et stocké concordent, le stockage des données d'étages de programmes fraîches dans le récepteur pour remplacer les données contenues dans l'autre message.

21. Procédé suivant la revendication 20, dans lequel les données d'étages de programmes fraîches ne bloquent aucun étage.

22. Procédé suivant l'une quelconque des revendications 17 à 21, dans lequel chaque récepteur stocke précédemment des données d'étages de programmes se rapportant à une autorisation d'accès aux divers étages de programmes, et dans lequel le stockage de données d'étages de programmes provenant de l'autre message ou des données d'étages de programmes fraîches, supplante les données d'étages de programmes précédemment stockées.

23. Procédé suivant la revendication 22, dans lequel les données d'autorisation d'étages de programmes précédemment stockées établissent les étages de programmes qui doivent être fournis immédiatement lors de la sélection au récepteur et ceux qui doivent être fournis au terme d'une autre transaction lors de la sélection.

24. Procédé suivant la revendication 23, dans lequel, pour chaque récepteur, les données d'autorisation d'étages de programmes sont stockées dans une zone de table d'implantation de bits d'une mémoire présente dans le récepteur dans laquelle un bit est attribué a chaque étage de programme.

25. Procédé suivant la revendication 23 ou 24, dans lequel les données d'autorisation d'étages de programmes pour chaque récepteur sont obtenues par l'émission d'un message contenant les données et l'adresse individuelle du récepteur.

26. Procédé suivant l'une quelconque des revendications 17 à 25, dans lequel chaque récepteur d'abonné comprend une zone de table d'implantation de bits d'une mémoire présente dans le récepteur pour stocker les données d'étages de programmes contenues dans un tel autre message, un bit étant attribué à chaque étage de programme.

27. Procédé suivant la revendication 26, dans lequel les données d'étages de programmes contenues dans l'autre message sont émises sous la forme d'une série de bits, un pour chaque étage de programme.

# F I G. 1

BLACKOUT MAP    BLOCKING MAP    AUTHORIZATION MAP    VIEWER

S0 — ALLOWABLE PROGRAM

MOVIE    S1

S2

SPORTS-1    S3 — NON—BLACKOUT SPORTS EVENT

SPORTS-2    S4

S5

BLACKED OUT SPORTS EVENT    NOT ALLOWED    ELIGIBLE FOR IPPV TRANSACTION

EP 0 183 392 B1

# F I G. 2

```
┌─────────────────────────────────────────────┐
│  INITIALIZE    BY    DOWNLOADING             │
│  DESIGNATION   CODE   TO                     │
│   INDIVIDUAL   UNITS                         │
└─────────────────────────────────────────────┘
                        │
                        ▼
        ┌─────────────────────────────────────┐
        │  CHOOSE   DESIGNATION   CODE         │
        │       TO    SET   (RESET)            │
        └─────────────────────────────────────┘
                        │
                        ▼
        ┌─────────────────────────────────────────┐
        │  SEND   GLOBAL   MESSAGE  (ADDRESSABLE   │
        │  WITH   ALL  I'S   ADDRESS)  TO  SET     │
        │    BITS  IN  BLACKOUT  BITS  MAP  IF     │
        │  DESIGNATION CODE IN UNIT MATCHES        │
        │  DESIGNATION  CODE  IN  ADDRESSED        │
        │            PACKET                        │
        └─────────────────────────────────────────┘
                        │
                        ▼
        ┌─────────────────────────────────────┐
        │  CHOOSE   NEXT   DESIGNATION         │
        │       CODE    TO    SET              │
        └─────────────────────────────────────┘
                        │
                        ▼  EXIT
```

EP 0 183 392 B1

```
┌─────────────────────────────────────┐
│   RECEIVE     COMPOSITE              │
│   TELEVISION   SIGNAL               │
└─────────────────────────────────────┘
                │
                ▼
┌─────────────────────────────────────┐
│   LOCATE   ADDRESSED   PACKET       │
│   WITH   UNIT   ADDRESS             │
└─────────────────────────────────────┘
                │
                ▼
┌─────────────────────────────────────┐
│   DECRYPT     MESSAGE               │
└─────────────────────────────────────┘
                │
                ▼
┌─────────────────────────────────────┐
│  OBTAIN   DESIGNATION   CODE        │
└─────────────────────────────────────┘
                │
                ▼
┌─────────────────────────────────────┐
│   STORE   DESIGNATION   CODE   IN   │
│   DESIGNATION   CODE   MEMORY       │
└─────────────────────────────────────┘
                │
                ▼
┌─────────────────────────────────────┐
│   LOCATE   ADDRESSED   PACKET       │
│   WITH   GLOBAL   ADDRESS           │
└─────────────────────────────────────┘
                │
                ▼
┌─────────────────────────────────────┐
│   LOOK   FOR   DESIGNATION          │
│   CODE   AND   BLACKOUT             │
│   TIER   INDICATION                 │
└─────────────────────────────────────┘
                │
                ▼
┌───────────────────────────┐   NO    ┌──────────┐
│  COMPARE   WITH   STORED  │──────▶ │   STOP   │
│  DESIGNATION   CODE       │        └──────────┘
└───────────────────────────┘
                │ YES
                ▼
┌───────────────────────────┐
│   STORE   BLACKOUT        │
│   TIER   INDICATION       │
│   IN   BLACKOUT   BIT     │
│   MAP   MEMORY            │
└───────────────────────────┘
```

F I G.3

```
┌─────────────────────────────────┐
│   RECEIVE    COMPOSITE          │
│  TELEVISION   SIGNAL            │
└─────────────────────────────────┘
              │
              ▼
┌─────────────────────────────────┐
│   SELECT    PROGRAM             │
│   FOR   DISPLAY                 │
└─────────────────────────────────┘
              │
              ▼
┌─────────────────────────────────┐
│   LOCATE   HEADER   PACKET      │
│   CORRESPONDING    TO           │
│   SELECTED    PROGRAM           │
└─────────────────────────────────┘
              │
              ▼
┌─────────────────────────────────┐
│   OBTAIN    PROGRAM             │
│   TIER   INDICATION             │
└─────────────────────────────────┘
              │
              ▼
┌─────────────────────────────────┐   YES
│   ACCESS    BLOCKING    BIT     │──────►
│  MAP MEMORY  COMPARE   WITH     │
│  BLOCKING   TIER   INDICATION   │
└─────────────────────────────────┘
              │ NO
              ▼
┌─────────────────────────────────┐   YES
│  ACCESS  BLACKOUT  BIT MAP MEMORY│──────►
│ COMPARE  WITH   BLACKOUT  TIER INDICATION│
└─────────────────────────────────┘
              │ NO
   NO         ▼
◄──────┌─────────────────────────────────┐
       │   ACCESS   AUTHORIZATION   BIT  │
       │  MAP   MEMORY  COMPARE   WITH   │
       │  AUTHORIZATION  TIER  INDICATION│
       └─────────────────────────────────┘
              │ YES
              ▼
┌─────────────────────────────────┐   NO
│  IMPULSE   PAY    PER           │──────►
│  VIEW   TRANSACTION             │
└─────────────────────────────────┘
              │ YES
              ▼
┌──────────────────┐      ┌──────────────────┐
│                  │      │                  │
│   DISPLAY        │      │   DO   NOT       │
│                  │      │   DISPLAY        │
└──────────────────┘      └──────────────────┘
```

F I G. 4

COMPOSITE
TV
SIGNAL

# F I G. 5

| ACTIVE VIDEO | SYNC | HBI | | ACTIVE VIDEO | SYNC | HBI | | ACTIVE VIDEO | SYNC | HBI |

| RUN IN CODE | ADDRESSABLE DATA STREAM | ENCRYPED AUDIO SIGNAL | AUDIO CODE | VIDEO INVERSION CODE | SPARE BITS |

HEADER
PROGRAM TIER
INDICATION (32 BIT)

↓

ADDRESS
PACKET 1

↓

ADDRESS
PACKET 2

↓

ADDRESS
PACKET R

↓

| GLOBAL ADDRESS |
| MESSAGE TYPE |
| DESIGNATION CODE |
| BLACKOUT TIER INDICATION (32 BIT) |

| SUBSCRIBER UNIT ADDRESS |
| MESSAGE TYPE |
| ENCRYPTED MESSAGE (DESIGNATION CODE) |
| DECRYPTION INFORMATION |

EP 0 183 392 B1